# EUROPÄISCHE PATENTSCHRIFT

(11) **EP 3 117 553 B1**
(45) Veröffentlichungstag und Bekanntmachung des Hinweises auf die Patenterteilung: **16.10.2019**
(21) Anmeldenummer: 15712261.5
(22) Anmeldetag: 05.03.2015
(51) Int. Cl.: H04L 5/00, H04W 52/34, H04B 3/54

(54) **VERFAHREN UND SYSTEM ZUR ENERGIEOPTIMIERTEN ÜBERTRAGUNG VON DATEN IN EINEM LEITUNGSGEBUNDENEN (MULTI CARRIER MODULATION-MCM) - ÜBERTRAGUNGSSYSTEM**
METHOD AND SYSTEM FOR POWER OPTIMIZED DATA TRANSMISSION IN A WIRED (MULTI CARRIER MODULATION - MCM) TRANSMISSION SYSTEM
PROCÉDÉ ET SYSTÈME DE TRANSMISSION ENERGIE-OPTIMISÉE DE DONNÉES DANS UN SYSTÈME DE TRANSMISSION CÂBLE (MODULATION À PORTEUSES MULTIPLES - MCM)

(30) Priorität: 13.03.2014 DE 102014204673
(43) Veröffentlichungstag der Anmeldung: 18.01.2017
(73) Patentinhaber: Hochschule Ruhr-West, Mülheim an der Ruhr (DE)
(72) Erfinder: BUMILLER, Gerd, 46244 Bottrop (DE); HALLAK, George, 45130 Essen (DE)
(74) Vertreter: RCD Patent Giesen, Schmelcher & Griebel Patentwanwälte PartG mbB
(86) Internationale Anmeldenummer: PCT/EP2015/054564
(87) Internationale Veröffentlichungsnummer: WO 2015/135819

(56) Entgegenhaltungen:
- US-A1- 2011 058 594

## Beschreibung

### Hintergrund

In vielen Bereichen der Technik sind Übertragungssysteme zum Austausch unterschiedlichster Daten im Einsatz. Dabei ist in aller Regel der Übertragungskanal nicht konstant, sondern seine Eigenschaften variieren. Ein Bereich dieser Datenübertragungssystems sind dabei die leitungsgebundenen Übertragungssysteme.

Ohne Beschränkung der Allgemeinheit gehören zu diesen Datenübertragungssystemen beispielsweise Digital Subscriber Line (DSL) Systeme als auch Power Line Communication (PLC) Systeme.

Aus der US 2011 / 0 058 594 A1 ist ein Kommunikationsverfahren für Powerline bekannt, bei dem der Impedanzvariationenumfang des gesamten Netzwerkes Berücksichtigung findet.

### Aufgabe

Zunehmend besteht jedoch ein Bedarf an energieoptimierten Systemen. Mit den bisherigen Systemen und Verfahren sind jedoch nur unzureichende Ergebnisse zu erzielen.

### Lösung

Es ist daher eine Aufgabe der Erfindung ein Verfahren und ein System zur energieoptimierten Übertragung von Daten in einem leitungsgebundenen Übertragungssystem, insbesondere einem (multi carrier modulation - MCM) - Übertragungssystem, bereitzustellen.

Die Erfindung löst diese Aufgabe durch ein Verfahren zu einer optimierten Übertragung von Daten in einem leitungsgebundenen Mehrträger (multi carrier modulation - MCM) - Übertragungssystem von einem Sender an einen oder mehrere Empfänger über einen Übertragungskanal, wobei dem Sender nur eine vorgegebene Versorgungsleistung zur Verfügung steht, wobei ein gesendete Signal zur Übertragung von Daten eine Vielzahl von Unterträgern aufweist, wobei die Daten zusammen mit redundanter Information so auf die Vielzahl von Unterträgern verteilt werden, dass der Empfänger für die Bestimmung der Daten auf einen Teil der Unterträger verzichten kann. Das Verfahren weist einen Schritt des Bestimmens von frequenzabhängigen Eingangsimpedanzen des leitungsgebundenen Übertragungskanal an dem Sender und ein Schritt des Einstellens der Signalamplitude der einzelnen Unterträger auf Basis der gemessenen frequenzabhängigen Eingangsimpedanzen und der begrenzten Versorgungsleistung auf.

Die Aufgabe wird weiterhin gelöst durch ein System zu einer optimierten Übertragung von Daten in einem leitungsgebundenen Mehrträger (multi carrier modulation - MCM) - Übertragungssystem von einem Sender an einen oder mehrere Empfänger über einen Übertragungskanal. Das System weist eine Sendeeinheit zum Senden eines Signals, wobei dem Sender nur eine vorgegebene Versorgungsleistung zur Verfügung steht, wobei das gesendet Signal zur Übertragung von Daten eine Vielzahl von Unterträgern aufweist, wobei die Daten zusammen mit redundanter Information so auf die Vielzahl von Unterträgern verteilt werden, dass der Empfänger für die Bestimmung der Daten auf einen Teil der Unterträger verzichten kann, eine Messeinheit zum Bestimmen von frequenzabhängigen Eingangsimpedanzen des leistungsgebunden Übertragungssystems an der Sendeeinheit, und eine Steuereinheit zum Einstellen der Signalamplitude der einzelnen Unterträger auf Basis der gemessenen frequenzabhängigen Eingangsimpedanzen und der begrenzten Versorgungsleistung auf.

Nachfolgend wird die Erfindung unter Bezug auf die angefügten Figuren näher beschrieben werden, wobei in den Zeichnungen
Figur 1 ein beispielhaftes Übertragungsmodel mit typischen Senderaufbau, linearer zeitvarianten Kanalmodell und Eingangswiderstand des Empfängers darstellt,
Figur 2 ein vereinfachtes äquivalentes Übertragungsmodel für die Berechnungen darstellt
Figur 3 ein beispielhaftes Modem darstellt, das Elemente der Erfindung beinhaltet,
Figur 4 ein beispielhaftes Flussdiagramm gemäß verschiedener Ausführungsformen der Erfindung zeigt, und
Figur 5 einen beispielhaften Vergleich eines Übertragungsverfahrens nach Stand der Technik und nach einer Ausführungsform der Erfindung am Beispiel des Kanalmodels zeigt bzw. den Ablauf einer Ausführungsform der Erfindung zeigt.

Im Folgenden wird die Erfindung in Bezug auf Power Line Communication (PLC), insbesondere in Bezug auf zukünftige Smart Grid Anwendungen, beschrieben werden. Ohne weiteres sind jedoch die Überlegungen auch auf andere leitungsgebundene Systeme als auch für andere Anwendungen verwendbar.

Zunächst ist festzustellen, dass es eine zunehmende Nachfrage nach PLC-Systemen gibt. Dies ist unter anderem darin begründet, dass die Übertragungswege und Anschlüsse in aller Regel schon vorhanden sind und nun für einen weiteren Zweck genutzt werden können. Dabei werden die unteren Frequenzbereiche, d.h. unter circa 600 kHz, bevorzugt unter 525 kHz verwendet. Allerdings sind die so verwendeten Übertragungswege als auch Anschlüsse in aller Regel nicht für den Gebrauch als Datenübertragungssystem ausgelegt worden. Zudem variieren die Eigenschaften mit der Zeit. Auch stellen die Art und der Anteil unterschiedlicher Störungen ein Problem dar.

Ein anderes - bisher nicht gelöstes Problem - ist die frequenzabhängige Impedanz, die sich unter anderem durch eine Fehlanpassung der Ausgangsimpedanz des Sendermodems und der variierenden Eingangsimpedanz des Übertragungsmediums ergeben. Weiterhin ist festzustellen, dass selbst bei Anpassung die zeitabhänge Einkoppelimpedanz zu nichtlinearen Verzerrungen des Kanals führt. Hierbei entstehen bei MCM System Intercarrier-interferrence.

Nachfolgend wird nun auf Mehrträgermodulationssysteme, sogenannte Multi carrier Modulation (MCM) Systeme abgestellt werden. Eine Ausformung solcher Systeme sind orthogonale frequency division modulation (OFDM) Systeme.

Dabei wird nachfolgend nur auf OFDM-System abgestellt werden, da diese Systeme eine besonders hohe Bandbreiteneffizient bereitstellen und zudem den vorhandenen Frequenzbereich sehr gut ausnutzen. Aufgrund der physikalischen Eigenschaften des OFDM-Systems, d.h. dass die Unterträger zueinander orthogonal sind, kann im Prinzip jeder Unterträger getrennt angesteuert werden. Diese getrennte, unabhängige Ansteuerung schließt die übertragene Leistung mit ein. Dabei ist die Kanalkapazität die maximale Menge an Information, die sicher über den Übertragungskanal transportiert werden kann. Insofern stellt die Kanalkapazität einen wichtigen Faktor in der Beurteilung der Leistungsfähigkeit solcher Übertragungssysteme dar. Von dieser Eigenschaft wird jedoch in herkömmlichen Systemen kein Gebrauch gemacht, wie nachfolgend näher erläutert werden wird.

Bei PLC Systemen ist eine starke Variation des Übertragungskanales festzustellen. Dabei spielen unterschiedliche Faktoren eine Rolle. Zum einen ändert sich der Übertragungskanal durch Schaltvorgänge, sodass durch Zuschalten oder Abschalten einzelner Leitungszweige der Übertragungskanal beeinflusst wird. Zum anderen haben die zunehmende Anzahl von Schaltnetzteilen und anderen nicht ohmschen Verbrauchern die Leitungsimpedanzen einen starken Einfluss auf Störungen auf dem Übertragungskanal als auch auf die Eingangsimpedanz.

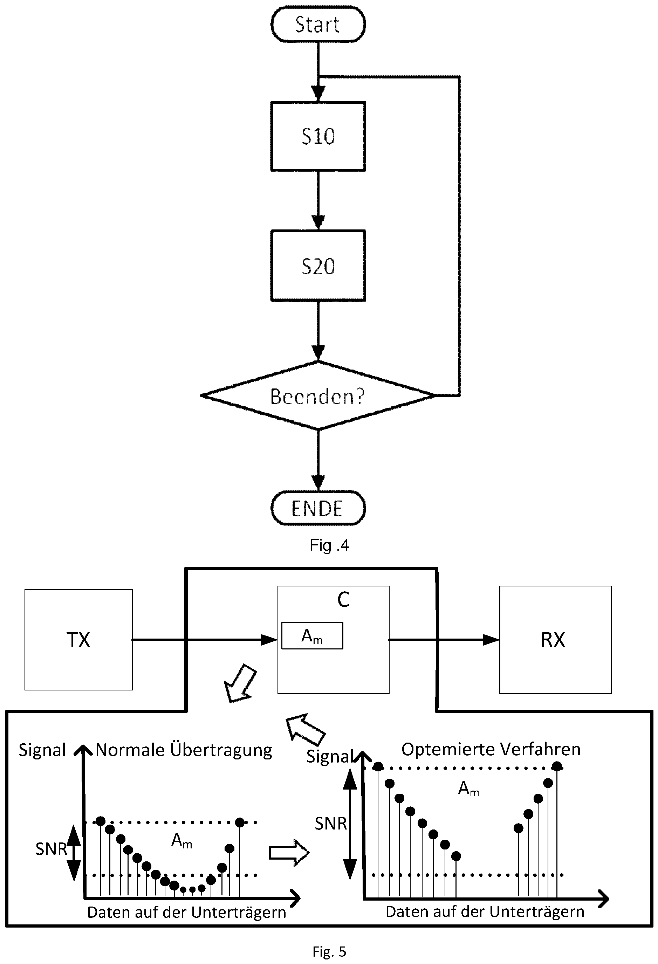

Bisher wurde eine Energieoptimierung nur dahingehend durchgeführt, dass der Strom des Sendesignals gemessen wird, welcher bei typischen Verstärkerstrukturen proportional zur aufgenommen Leistung des Sendeverstärkers ist. Übersteigt der Strom, bzw. aufgenommene Leistung eine Schwelle, so wird das komplette Sendesignal, d.h. alle Unterträger, skaliert um somit die aufgenommene Leistung zu begrenzen. Die spektrale Formung des Signals wird hierbei nicht verändert. Dieser Fall ist in Figur 5 auf der linken Seite in Bezug auf die normale Übertragung von Daten eines Senders TX an einen Empfänger RX über einen Kanal mittels einer Vielzahl von Unterträgern gezeigt. Dabei zeigt sich, dass nur ein eingeschränktes Signal to Noise Ratio (SNR) erreicht werden kann.

Die Erfinder haben nun erkannt, dass für den hohen Strom nur ein kleiner Anteil der Subträger verantwortlich, da die Eingangsimpedanz des Kanals unterschiedliche Werte für verschiedene Frequenzen annimmt. Eine Skalierung der anderen Subträger zum Einhalten der Leistung- / Stromgrenze ist nicht notwendig, vielmehr ist die Skalierung dieser Subträger für die Übertragung sogar schädlich. Dieses zeigt sich in Figur 5 auf der linken Seite dadurch, dass einige Unterträger sogar ganz im Rauschen untergehen.

Um diesen Zusammenhang zu verstehen wird zunächst das Übertragungsmodel näher erläutert werden.

Im praktischen Einsatz stellt das Anbinden eines Senders an einem Anschluss an das Übertragungsnetz und das Anbinden eines Empfängers an einen anderen Anschluss an das Übertragungsnetz mittels jeweiliger Anschlusskreise einen Übertragungskanal dar, wobei durch Messungen in Bezug auf diese zwei Anbindungspunkte die Charakterisierung des Übertragungskanals bewerkstelligt werden kann.

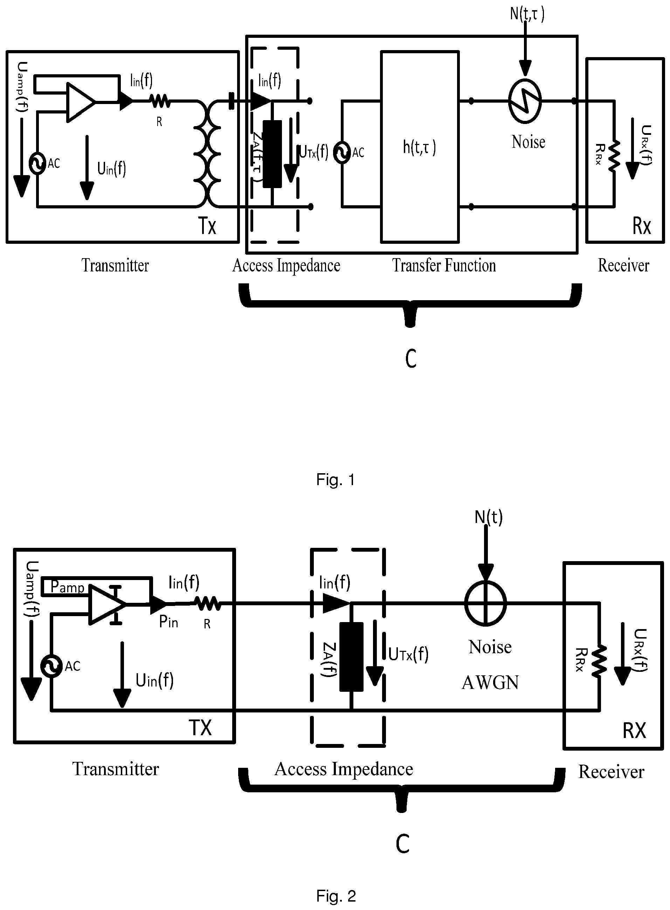

Im Allgemeinen kann die Charakterisierung durch die Eingangsimpedanz, die Übertragungsfunktion und das Rauschen beschrieben werden. In Figur 1 ist hierzu ein vollständiges Modell eines (PLC-) Übertragungssystems angegeben. Dabei ist auf der linken Seite der Sender TX nebst Ankoppelung dargestellt. Weiterhin ist der modellierte Übertragungskanal in der Mitte nebst zeitlich variierender und frequenzabhängiger Eingangsimpedanz und Rauschquelle dargestellt. Die Eingangsimpedanz Z_{A}(f,τ) ist in aller Regel komplex und weist ein zeitlich veränderliches Verhalten auf. Daher kann die Eingangsimpedanz nicht als konstant angenommen werden. Das zu übertragende Signal wird durch die zeitabhängige Übertragungsfunktion h(t,τ) beeinflusst. Das so veränderte Signal wird zudem Störeinflüssen ausgesetzt, die als zusätzliche Störanteile dargestellt sind. Diese Rauschanteile n(t,τ) können unterschiedlicher Natur sein. Auf der rechten Seite ist anschließend der Empfänger RX dargestellt.

Bisher wurden nur der Einfluss der Rauschfunktion n(t,τ) als auch der Übertragungsfunktion untersucht während der Einfluss der Eingangsimpedanz nicht berücksichtigt wurde.

Um den Einfluss der Eingangsimpedanz besser darstellen zu können wird die Eingangsimpedanz von den anderen Teilen des Übertragungskanalmodells wie in Figur 2 dargestellt getrennt. Dabei wird die Übertragungsfunktion h(t,τ) und das Rauschen als ein Kanal mit zusätzlichem weißen gaußsches Rauschen (additive white Gaussian noise - AWGN) modelliert. Zur Vereinfachung kann weiterhin in Bezug auf niedrige Frequenzen angenommen werden, dass sowohl die Kapazität des Senders als auch der Übertrager vernachlässigt werden kann, sodass die Eingangsimpedanz Z_{A}(f) vereinfacht dargestellt werden kann.

Mit dem erfindungsgemäßen Verfahren bzw. dem erfindungsgemäßen System ist es nun möglich eine Optimierung in Bezug auf die Übertragung und die hierfür verwendete Leistung bereitzustellen.

In dem erfindungsgemäßen Verfahren bzw. System zu einer optimierten Übertragung von Daten in einem leitungsgebundenen Mehrträger (multi carrier modulation - MCM) - Übertragungssystem von einem Sender bzw. der Sendereinheit TX an einen oder mehrere Empfänger RX₁, RX₂, ... RXₙ über einen Übertragungskanal C wird zunächst angenommen, dass der Sender bzw. die Sendeeinheit TX nur eine vorgegebene Versorgungsleistung Pₘₐₓ zur Verfügung steht. Dies kann zum einen normativ, z.B. durch eine Spezifikation wie EN50056-1 vorgegeben sein, oder aber einfach durch die Leistungsfähigkeit der jeweiligen Energieversorgungen gegeben sein. EN 50065-1 normiert z.B. die Ausgangsspannung. Bei höherer Einkoppelimpedanz ist damit auch die Leistung begrenzt. Bei niedriger Einkoppelimpedanz übersteigt bei Verwendung der normierten Spannung dies die verfügbare Leistung des Senders bei weiten.

Ein gesendete Signal S zur Übertragung von Daten weist dann eine Vielzahl m von Unterträgern T₁, T₂, ... Tₘ auf, wobei m >= 2, in aller Regel sogar m»2, ist.

Die Daten werden zusammen mit redundanter Information so auf die Vielzahl von Unterträgern T₁, T₂, ... Tₘ verteilt, dass der Empfänger RX für die Bestimmung der Daten auf einen Teil der Unterträger verzichten kann.

Nun wird in einem ersten Schritt S10, wie in Figur 4 beispielhaft dargestellt, an zumindest zwei oder mehreren Stellen f₁, f₂, ... fₗ im verwendeten Frequenzspektrum der Unterträger T₁, T₂, Tₘ jeweils eine frequenzabhängige Eingangsimpedanz Z₁, Z₂, .. Zₗ des leitungsgebundenen Übertragungskanals C auf der Seite des Senders bzw. der Sendeeinheit TX bestimmt. Es bleibt anzumerken, dass eine derartige Bestimmung nicht deckungsgleich mit den Frequenzen der Unterträgern sein muss, d.h. es kann die Eingangsimpedanz an mehr Stellen als Unterträger vorhanden sind oder umgekehrt auch an weniger Stellen als Unterträger vorhanden sind bestimmt werden. In einer vorteilhaften Weiterbildung der Erfindung wird an zumindest einigen Frequenzen der Unterträger auch die Eingangsimpedanz bestimmt. Beispielsweise wird dieser Schritt durch eine Messeinheit ME durchgeführt. Dieser Schritt kann beispielsweise auch als "normale Übertragung" in Figur 5 implementiert sein.

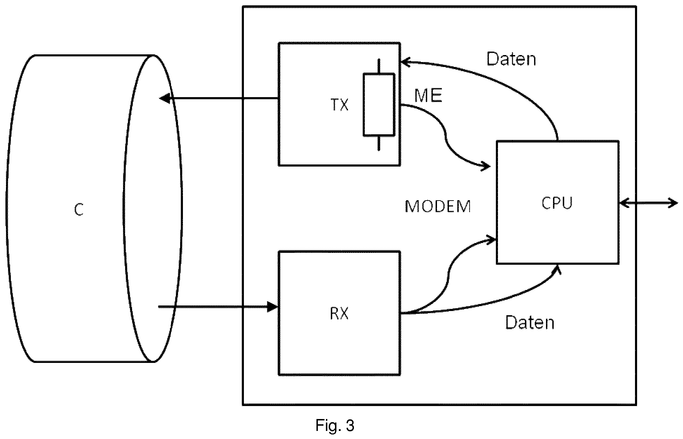

In einem weiteren Schritt S20 wird nun auf Basis der gemessenen frequenzabhängigen Eingangsimpedanzen Z₁, Z₂, ... Zₗ und der vorgegebenen Versorgungsleistung Pₘₐₓ, die Signalamplitude A₁, A₂, ... Aₘ der einzelnen Unterträger T₁, T₂, ... Tₘ eingestellt. Dieser Schritt kann beispielsweise auch als "optimierte Verfahren" in Figur 5 implementiert sein. Dies kann beispielsweise durch eine Steuereinheit CPU erfolgen, wie in Figur 3 dargestellt. Beispielhaft kann eine derartige Steuereinheit ein geeignet programmierter Digital Signal Prozessor, ein Mikroprozessor, ein ASIC oder ein FPGA sein, ohne jedoch hierauf beschränkt zu sein.

Mit einem derartigen Verfahren bzw. dem zughörigen System aus Sender TX und Empfänger RX kann nun eine optimierte Übertragung von Daten sowohl in energetischer Sicht als auch in Kanaleffizienzsicht erreicht werden. Dieser Fall ist in Figur 5 auf der rechten Seite in Bezug auf die optimierte Übertragung von Daten eines Senders TX an einen Empfänger RX über einen Kanal mittels einer Vielzahl von Unterträgern gezeigt. Dabei zeigt sich, dass ein verbessertes Signal to Noise Ratio (SNR) erreicht werden kann.

In einer vorteilhaften Ausgestaltung der Erfindung können die frequenzabhängigen Eingangsimpedanzen Z₁, Z₂, ... Zₗ durch Messung eines Stromes oder eines Spannungsabfalles über ein Teil der in dem Sender bzw. der Sendeeinheit TX befindlichen Bauelemente für einen oder mehrere Unterträger T₁, T₂, ... Tₘ im Sender bestimmt werden. Beispielsweise kann wie in Figur 3 gezeigt, von dem Sender bzw. der Sendeeinheit TX eines Modems eine Messung an einem Messwiderstand dargestellt in Figur 3 stellvertretend für eine Messeinheit ME durchgeführt werden und anschließend einer Verarbeitung, z.B. durch einen Prozessor CPU, zugeführt werden. Hierdurch kann die Komplexität des Systems verringert werden. Beispielsweise kann nun bei einer Übertragung von Daten unmittelbar die frequenzabhängige Eingangsimpedanz Z₁, Z₂, ... Zₗ für eine weitere zeitlich nachfolgende Übertragung weiterer Daten bestimmt werden. D.h. in einem ersten Sendeschritt S10 werden Daten gesendet und gleichzeitig eine Messung durchgeführt, die dann in einem Schritt S20 zu einer Einstellung eines nachfolgenden weiteren Datenübertragungsschrittes(erneut) S10 verwendet werden kann.

Beispielsweise sind in einem Modem wie in Figur 3 dargestellt zumindest eine Sendeeinheit TX und eine Empfangseinheit RX integriert. So kann z.B. wenn die Sendeeinheit TX des Modems gerade sendet, die dann an sich inaktive Empfangseinheit RX des gleichen Modems für die Messung der Eingangsimpedanz auf Basis des gerade gesendeten Signals verwendet werden. Typischerweise werden dann die Sendeeinheit TX als auch die Empfangseinheit RX in einer gemeinsamen Einheit, einem sogenannten Transceiver (Transmitter-Receiver) vereinigt. Hierdurch wird keine besondere Messeinheit ME benötigt, womit die Komplexität der Sendeeinheit TX sinkt.

Soweit vorstehend in Bezug auf Schritt S20 ein einstellen der Amplitude aufgeführt ist kann dieses Einstellen einer einzelnen Signalamplitude A₁, A₂, ... Aₘ auch eine Einstellung dahingehend sein, dass eine geringere Signalamplitude als in einem benachbarten Unterträger eingestellt wird, oder aber, dass die Signalamplitude zu 0 eingestellt wird, d.h. dass überhaupt keine Signalamplitude am Ausgang des Senders bzw. der Sendeeinheit TX zur Verfügung gestellt wird. Beispielsweise wird bei zumindest einem Unterträger mit einer niedrigen frequenzabhängigen Eingangsimpedanz keine Signalamplitude zur Verfügung eingestellt. Dieser Fall ist in Figur 5 auf der rechten Seite in Bezug auf die optimierte Übertragung von Daten eines Senders TX an einen Empfänger RX über einen Kanal mittels einer Vielzahl von Unterträgern gezeigt. Dabei zeigt sich, dass einzelne Unterträger, bei denen z.B. die Leistung so gering wäre, dass die Leistung geringer als die Leistung der Störanteile wäre, kein Signal zur Verfügung gestellt wird und statt dessen die Leistung auf andere Unterträger verteilt wird und somit ein verbessertes Signal to Noise Ratio (SNR) erreicht werden kann.

In besonders vorteilhafter Weise kann die Erfindung in einem orthonogal frequency division multiplex (OFDM) System verwendet werden, da hier auf Grund der Orthogonalität der Unterträger T₁, T₂, ... Tₘ diese voneinander unabhängig eingestellt werden können.

Die Einstellung der Signalamplituden A₁, A₂, ... Aₘ der Unterträger kann dabei unterschiedlich ausgestaltet sein. Nachfolgend wird zumindest eine Möglichkeit angegeben, wobei andere Lösungen für den Fachmann unmittelbar ableitbar sind.

Beispielsweise kann die Signalamplituden A₁, A₂, ... Aₘ der einzelnen Unterträger so eingestellt werden, dass entweder am Eingang des Übertragungskanals die Summe der Spannungen der einzelnen Unterträger maximal wird, oder die übertragene Information zum Empfänger maximal wird. D.h. durch Wahl des entsprechenden Verfahrens kann der Fokus mehr auf die Kanalkapazität oder mehr auf die Energieoptimierung oder aber in (gewichteten) Mischformen zu einer Optimierung beider Zielgrößen gelegt werden.

Weiterhin erlaubt das erfindungsgemäße Verfahren bzw. das erfindungsgemäße System auch, dass neben der frequenzabhängigen Eingangsimpedanz Z_{A}(f) bzw. Z_{A}(f,τ) bzw. Z₁, Z₂, ... Zₗ zusätzlich die zu der Netzfrequenz f_{Netz} synchrone zeitliche Veränderung der Eingangsimpedanz Z_{A}(f,τ) bzw. Z₁(τ), Z₂(τ), ... Zₗ(τ) zur Einstellung der Signalamplituden A₁, A₂, ... Aₘ der Unterträger T₁, T₂, ... Tₘ verwendet wird.

Das vorgestellte System und Verfahren ist insbesondere für System in den tiefen Frequenzbereichen geeignet, insbesondere für System, das Unterträger mit Frequenzen aus dem Bereich unter 525 kHz verwendet.

Insbesondere ist das vorgestellt System ein Powerline Communication System ist.

Die vorgestellte Erfindung ist besonders geeignet für Systeme bei denen die Begrenzung der Versorgungsleistung durch eine Begrenzung des Stromes im Sender gegeben ist.

Durch das System werden insbesondere Anwendungen aus dem Bereich von SmartMeter-, SmartGrid- oder einem SmartHome-System verbessert, da diese nun mit hoher Kanaleffizienz bei gleichzeitiger Energieeffizienz betrieben werden können. Weiterhin kann die Erfindung auch in einem industriellen Automatisierungssystem oder aber bei Datenübertragungssystemen aus dem Pipeline-Bereich verwendet werden.

Mit dem vorgestellten Verfahren bzw. dem vorgestellten System wird nunmehr nicht mehr wie zuvor die Gesamtleistung des Senders vermindert, sondern es wird gezielt auf einen oder mehrere Unterträger eingewirkt, sodass die Energieeffizienz bei gleichzeitiger Ausnutzung der Kanalkapazität gewährleistet ist. Dies kann insbesondere dadurch erreicht werden, dass ein oder mehrere Unterträger in ihren Amplituden vermindert oder sogar ganz abgeschaltet werden.

Die vorgestellten Verfahren und das vorgestellte System können die Anpassung autonom, d.h. ohne Kommunikation mit der Gegenstelle ausführen. Alternative kann das vorgestellte Verfahren und das vorgestellte System aber auch in Systemen verwendet werden, in denen die jeweiligen Gegenstellen zunächst Kommunikationsparameter aushandeln bzw. bei bestimmten Ereignissen neu aushandeln. Hierzu kann z.B. zwischen den Schritten S10 und S20 ein Zwischenschritt vorgesehen sein, in dem die beteiligten Gegenstellen die Kommunikationsparameter, z.B. die verwendeten Unterträger und/oder auch die verwendeten Amplituden der Unterträger, aushandeln.

## Patentansprüche

1. Autonomes Verfahren zu einer optimierten Übertragung von Daten in einem leitungsgebundenen Mehrträger, multi carrier modulation - MCM, - Übertragungssystem von einem Sender an einen oder mehrere Empfänger über einen Übertragungskanal, wobei dem Sender nur eine vorgegebene Versorgungsleistung zur Verfügung steht, wobei ein gesendetes Signal zur Übertragung von Daten eine Vielzahl von Unterträgern aufweist, wobei die Daten zusammen mit redundanter Information so auf die Vielzahl von Unterträgern verteilt werden, dass der Empfänger für die Bestimmung der Daten auf einen Teil der Unterträger verzichten kann, aufweisend die Schritte:
• Bestimmen von frequenzabhängigen Eingangsimpedanzen des leitungsgebundenen Übertragungskanal auf der Senderseite,
• auf Basis der gemessenen frequenzabhängigen Eingangsimpedanzen und der vorgegebenen Versorgungsleistung, einstellen der Signalamplitude der einzelnen Unterträger.

2. Verfahren nach Anspruch 1, **dadurch gekennzeichnet, dass** die frequenzabhängige Eingangsimpedanz durch Messung eines Stromes oder eines Spannungsabfalles über ein Teil der in der Sendeeinheit befindlichen Bauelemente für einen oder mehrere Unterträger im Sender bestimmt wird.

3. Verfahren nach Anspruch 1 oder 2, **dadurch gekennzeichnet, dass** bei der Einstellung zumindest ein Unterträger mit einer niedrigen frequenzabhängigen Eingangsimpedanz keine Signalamplitude zur Verfügung stellt.

4. Verfahren nach einem der vorhergehenden Ansprüche, **dadurch gekennzeichnet, dass** es sich bei dem Mehrträger-Übertragungssystem um ein orthonogal frequency division multiplex, OFDM, Verfahren handelt.

5. Verfahren nach einem der vorhergehenden Ansprüche, **dadurch gekennzeichnet, dass** die Signalamplituden der Unterträger so eingestellt werden, dass entweder am Eingang des Übertragungskanals die Summe der Spannungen der einzelnen Unterträger maximal wird, oder die übertragene Information zum Empfänger maximal wird.

6. Verfahren nach einem der vorhergehenden Ansprüche, **dadurch gekennzeichnet, dass** neben der frequenzabhängigen Eingangsimpedanz zusätzlich die zu der Netzfrequenz synchrone zeitliche Veränderung der Eingangsimpedanz zur Einstellung der Signalamplituden der Unterträger verwendet wird.

7. System zu einer optimierten Übertragung von Daten in einem leitungsgebundenen Mehrträger, multi carrier modulation - MCM, - Übertragungssystem von einem Sender an einen oder mehrere Empfänger über einen Übertragungskanal, wobei der Sender aufweist:
• eine Sendeeinheit zum Senden eines Signals, wobei dem Sender nur eine vorgegebene Versorgungsleistung zur Verfügung steht, wobei das gesendet Signal zur Übertragung von Daten eine Vielzahl von Unterträgern aufweist, wobei die Daten zusammen mit redundanter Information so auf die Vielzahl von Unterträgern verteilt werden, dass der Empfänger für die Bestimmung der Daten auf einen Teil der Unterträger verzichten kann,
• eine Messeinheit zum Bestimmen von frequenzabhängigen Eingangsimpedanzen des leistungsgebunden Übertragungssystems auf der Senderseite,
• eine Steuereinheit zum Einstellen der Signalamplitude der einzelnen Unterträger auf Basis der gemessenen frequenzabhängigen Eingangsimpedanzen und der vorgegebenen Versorgungsleistung.

8. System nach Anspruch 7, **dadurch gekennzeichnet, dass** die frequenzabhängige Eingangsimpedanz durch Messung eines Stromes oder eines Spannungsabfalles über ein Teil der in der Sendeeinheit befindlichen Bauelemente für einen oder mehrere Unterträger durch die Messeinheit bestimmt wird.

9. System nach Anspruch 7 oder 8, **dadurch gekennzeichnet, dass** die Steuereinheit bei zumindest einem Unterträger mit einer niedrigen frequenzabhängigen Eingangsimpedanz so einstellt, dass er keine Signalamplitude zur Verfügung stellt.

10. System nach einem der vorhergehenden Ansprüche 7 bis 9, **dadurch gekennzeichnet, dass** es sich bei dem Mehrträger-Übertragungssystem um ein orthonogal frequency division multiplex, OFDM, System handelt.

11. System nach einem der vorhergehenden Ansprüche 7 bis 10, **dadurch gekennzeichnet, dass** die Signalamplituden der Unterträger so eingestellt werden, dass entweder am Eingang des Übertragungskanals die Summe der Spannungen der einzelnen Unterträger maximal wird, oder die übertragene Information zum Empfänger maximal wird.

12. System nach einem der vorhergehenden Ansprüche 7 bis 11, **dadurch gekennzeichnet, dass** neben der frequenzabhängigen Eingangsimpedanz zusätzlich die zu der Netzfrequenz synchrone zeitliche Veränderung der Eingangsimpedanz zur Einstellung der Signalamplituden der Unterträger verwendet wird.

13. System nach einem der vorhergehenden Ansprüche 7 bis 12, **dadurch gekennzeichnet, dass** das System Unterträger aus dem Bereich unter 525 kHz verwendet.

14. System nach einem der vorhergehenden Ansprüche 7 bis 13, **dadurch gekennzeichnet, dass** das System ein Powerline Communication System ist.

15. System nach einem der vorhergehenden Ansprüche 7 bis 14, **dadurch gekennzeichnet, dass** die Sendeeinheit Bestandteil einer Sende-/Empfangseinheit (Transceiver) ist und die Messeinheit zum Bestimmen der frequenzabhängigen Eingangsimpedanz in die Empfangseinheit des Systems integriert ist.

16. System nach einem der vorhergehenden Ansprüche 7 bis 15, **dadurch gekennzeichnet, dass** die Begrenzung der Versorgungsleistung durch eine Begrenzung des Stromes im Sender gegeben ist.

17. Verwendung eines Systems nach einem der vorhergehenden Ansprüche 7 bis 16, in einem SmartMeter-, SmartGrid- , einem SmartHome-System oder einem industriellen Automatisierungssystem.

## Claims

1. Autonomous method for an optimised transmission of data in a wired Multi-Carrier Modulation - MCM - transmission system from a transmitter to one or more receivers via a transmission channel, whereby the transmitter is provided with only a predetermined supply power, whereby a transmitted signal for transmitting data comprises a plurality of subcarriers, whereby the data together with redundant information is distributed to the plurality of subcarriers in such a way that the receiver can dispense with some of the subcarriers in order to determine the data, the method comprising steps of:
• measuring frequency-dependent access impedances of the wired transmission channel to the transmitter on side of the transmitter;
• on the basis of the frequency-dependent access impedances and the predetermined supply power, adjusting the signal amplitude of each of the subcarriers.

2. Method according to claim 1, **characterized in that** the frequency-dependent access impedance is determined by measuring a current or a voltage drop over part of the components located in the transmission unit for one or more subcarriers.

3. Method according to claim 1 or 2, **characterized in that** at least one subcarrier having a low frequency-dependent access impedance does not provide a signal amplitude when adjusting.

4. Method according to any preceding claim, **characterized in that** the Multicarrier transmission system is an Orthogonal Frequency Division Multiplex, OFDM, method.

5. Method according to any preceding claim, **characterized in that** the signal amplitude of each of the subcarriers is adjusted such that either on the input of the transmission channel a sum of voltages of the individual subcarriers is maximum or the redundant information transmitted to the receiver is maximum.

6. Method according to any preceding claim, **characterized in that** besides of the frequency-dependent access impedance in addition also a temporal change to the access impedance, which is synchronous to the network frequency, is used for adjusting signal amplitude of each of the subcarriers.

7. System for optimised transmission of data in a wired Multi-Carrier Modulation - MCM - transmission system from a transmitter to one or more receivers via a transmission channel, whereby the transmitter comprises:
• a transmission unit configured to transmit a signal for the transmission of data, wherein only one predetermined supply power is provided for the transmitter, the transmitted signal comprises a plurality of subcarriers, the data together with redundant information is distributed to the plurality of subcarriers such that the one or more receivers can dispense with some of the subcarriers in order to determine the data;
• a measurement unit configured to measure frequency-dependent access impedances of the wired MCM transmission system on the transmission unit; and
• a control unit configured to adjust the signal amplitude of each of the subcarriers on the basis of the measured frequency-dependent access impedances and the specified supply power.

8. System according to claim 7, **characterized in that** the frequency-dependent access impedance are determined by the measuring unit by measuring a current or a voltage drop over part of components located in the transmission unit for one or more of the subcarriers.

9. System according to claim 7 or 8, **characterized in that** the control unit adjusts the signal amplitude of at least one of the subcarriers having a low frequency-dependent access impedance, such that it does not provide for a signal amplitude.

10. System according to one of the preceding claims 7 to 9, **characterized in that** the Multi-carrier transmission system is an Orthogonal Frequency Division Multiplex, OFDM, system.

11. System according to one of the preceding claims 7 to 10, **characterized in that** the signal amplitudes of the subcarriers are adjusted such that either on an input of the transmission channel the sum of voltages of each of the subcarriers is maximum or the redundant information transmitted to the receiver is maximum.

12. System according to one of the preceding claims 7 to 11, **characterized in that** besides of the frequency-dependent access impedance in addition also a temporal change to the access impedance, which is synchronous to the network frequency, is used for adjusting signal amplitude of each of the subcarriers.

13. System according to one of the preceding claims 7 to 12, **characterized in that** wherein the system uses subcarriers from the range below 525 kHz.

14. System according to one of the preceding claims 7 to 13, **characterized in that** the system is a power line communication system.

15. System according to one of the preceding claims 7 to 14, **characterized in that** the transmission unit is a component of a transmission/reception unit (transceiver) and the measurement unit is integrated in the reception unit of the system.

16. System according to one of the preceding claims 7 to 15, **characterized in that** the predetermined supply power is provided by limiting a current in the transmitter.

17. Use of a Systems according to any of the preceding claims 7 to 16 in a SmartMeter-, SmartGrid-, a SmartHome-System or within an industrial automation system.

## Revendications

1. Procédé autonome, pour un transfert optimisé de données dans un système de transfert MCM de modulation multi-porteuses d'un émetteur à un ou à plusieurs récepteurs via un canal de transfert, l'émetteur ne disposant que d'une puissance d'alimentation prédéfinie, un signal envoyé pour le transfert de données comportant une pluralité de sous-porteuses, les données étant distribuées conjointement avec une information redondante sur une pluralité de sous-porteuses, de telle sorte que pour la détermination des données, le récepteur puisse renoncer à une partie des sous-porteuses, comportant les étapes consistant à :
• déterminer des impédances d'entrée dépendant de la fréquence du canal de transfert filaire sur le côté émetteur,
• sur la base de l'impédance d'entrée dépendant de la fréquence mesurée et de la puissance d'alimentation prédéfinie, régler l'amplitude du signal des sous-porteuses individuelles.

2. Procédé selon la revendication 1, **caractérisé en ce que** l'impédance d'entrée dépendant de la fréquence est déterminée par la mesure d'un courant ou d'une chute de tension sur une partie des composants se trouvant dans l'unité émettrice pour une ou plusieurs sous-porteuses dans l'émetteur.

3. Procédé selon la revendication 1 ou 2, **caractérisé en ce que** lors du réglage, au moins une sous-porteuse d'une basse impédance d'entrée dépendant de la fréquence ne met à disposition aucune amplitude de signal.

4. Procédé selon l'une quelconque des revendications précédentes, **caractérisé en ce que** le système de transfert multi-porteuses est un procédé OFDM multiplex à division de fréquence orthogonale.

5. Procédé selon l'une quelconque des revendications précédentes, **caractérisé en ce que** les amplitudes de signaux des sous-porteuses sont réglées de telle sorte, que soit à l'entrée du canal de transfert, la somme des tensions des sous-porteuses individuelles atteigne un maximum, ou que l'information transférée au récepteur atteigne un maximum.

6. Procédé selon l'une quelconque des revendications précédentes, **caractérisé en ce que** parallèlement à l'impédance d'entrée dépendant de la fréquence, additionnellement la variation temporelle synchrone à la fréquence du réseau de l'impédance d'entrée est utilisée pour le réglage des amplitudes de signaux des sous-porteuses.

7. Système pour un transfert optimisé de données dans un système de transfert MCM de modulation multi-porteuses d'un émetteur à un ou à plusieurs récepteurs via un canal de transfert, l'émetteur comportant :
• une unité émettrice, destinée à envoyer un signal, l'émetteur ne disposant que d'une puissance d'alimentation prédéfinie, le signal envoyé pour le transfert de données comportant une pluralité de sous-porteuses, les données étant distribuées conjointement avec une information redondante sur une pluralité de sous-porteuses, de telle sorte que pour la détermination des données, le récepteur puisse renoncer à une partie des sous-porteuses,
• une unité de mesure, destinée à déterminer des impédances d'entrée dépendant de la fréquence du système de transfert filaire sur le côté émetteur,
• une unité de commande, destinée à régler l'amplitude du signal des sous-porteuses individuelles, sur la base des impédances d'entrée dépendant de la fréquence qui ont été mesurées et de la puissance d'alimentation prédéfinie.

8. Système selon la revendication 7, **caractérisé en ce que** l'impédance d'entrée dépendant de la fréquence est déterminée par l'unité de mesure, par la mesure d'un courant ou d'une chute de tension sur une partie des composants se trouvant dans l'unité émettrice pour une ou plusieurs sous-porteuses.

9. Système selon la revendication 7 ou 8, **caractérisé en ce que** sur au moins une sous-porteuse, l'unité de commande procède au réglage avec une basse impédance d'entrée dépendant de la fréquence, de sorte qu'elle ne mette à disposition aucune amplitude de signal.

10. Système selon l'une quelconque des revendications précédentes 7 à 9, **caractérisé en ce que** le système de transfert multi-porteuses est un système OFDM multiplex à division de fréquence orthogonale.

11. Système selon l'une quelconque des revendications précédentes 7 à 10, **caractérisé en ce que** les amplitudes de signaux des sous-porteuses sont réglées de telle sorte, que soit à l'entrée du canal de transfert, la somme des tensions des sous-porteuses individuelles atteigne un maximum, ou que l'information transférée au récepteur atteigne un maximum.

12. Système selon l'une quelconque des revendications précédentes 7 à 11, **caractérisé en ce que** parallèlement à l'impédance d'entrée dépendant de la fréquence, additionnellement la variation temporelle synchrone à la fréquence du réseau de l'impédance d'entrée est utilisée pour le réglage des amplitudes de signaux des sous-porteuses.

13. Système selon l'une quelconque des revendications précédentes 7 à 12, **caractérisé en ce que** le système utilise des sous-porteuses de l'ordre intérieur à 525 kHz.

14. Système selon l'une quelconque des revendications précédentes 7 à 13, **caractérisé en ce que** le système est un système de communication par courant porteur.

15. Système selon l'une quelconque des revendications précédentes 7 à 14, **caractérisé en ce que** l'unité émettrice est un élément d'une unité émettrice/réceptrice (transceiver) et l'unité de mesure destinée à déterminer l'impédance d'entrée dépendant de la fréquence est intégrée dans l'unité réceptrice du système.

16. Système selon l'une quelconque des revendications précédentes 7 à 15, **caractérisé en ce que** la limitation de la puissance d'alimentation est donnée par une limitation du courant dans l'émetteur.

17. Utilisation d'un système selon l'une quelconque des revendications précédentes 7 à 16, dans un système de compteur intelligent, de réseau intelligent, de maison intelligente ou dans un système industriel d'automatisation.
